**Europäisches Patentamt**

**European Patent Office**

**Office européen des brevets**

(19)

(11) Veröffentlichungsnummer: **0 255 132**
**A2**

(12) **EUROPÄISCHE PATENTANMELDUNG**

(21) Anmeldenummer: **87111038.3**

(22) Anmeldetag: **30.07.87**

(51) Int. Cl.⁴: **D01F 9/10 , C08G 77/62**

(30) Priorität: **30.07.86 DE 3625690**

(43) Veröffentlichungstag der Anmeldung:
**03.02.88 Patentblatt 88/05**

(84) Benannte Vertragsstaaten:
**AT BE CH DE FR GB IT LI NL**

(71) Anmelder: **WACKER-CHEMIE GMBH**
**Prinzregentenstrasse 22**
**D-8000 München 22(DE)**

(72) Erfinder: **Rengstl, Alfred, Dr. Dipl.-Chem.**
**Zoglerberg 8**
**D-8261 Reischach(DE)**

(54) **Verfahren zur Herstellung von SiC-enthaltender Keramikfaser.**

(57) Verfahren zur Herstellung von SiC-enthaltender Keramikfaser, bei dem als Ausgangsstoff ein Silazanpolymeres, erhalten durch Umsetzung von Dichlordiorganosilan der allgemeinen Formel

$$R_2 SiCl_2$$

(R ist unabhängig voneinander Methyl-, Ethyl-, Propyl-, Vinyl-und Phenylrest)
mit Dichlormethylsilan und Hexamethyldisilazan in inerter Atmosphäre bei einer Temperatur im Bereich von 350 - 450°C unter Abdestillieren der flüchtigen Nebenprodukte, eingesetzt wird.

EP 0 255 132 A2

## Verfahren zur Herstellung von SiC-enthaltender Keramikfaser

SiC-enthaltende Keramikfasern werden in Verbundstoffen mit einer Vielzahl von Materialien wie Kunststoffen, Gläsern, keramischen Materialien und Metallen verwendet.

Siliciumcarbid wurde ursprünglich durch die Reaktion anorganischen Materials, z.B. Siliciumdioxid, und einer Kohlenstoffquelle, z.B. Koks oder Graphit, bei extrem hohen Temperaturen erhalten. In neuerer Zeit sind verschiedene Methoden zur Herstellung von Siliciumcarbid aus organischen Materialien wie Silanen oder anderen organischen Siliciumverbindungen bekannt geworden.

In der US-4,312,970 (Anmelder Dow Corning Corporation, erteilt am 26.01.1982) wird ein Verfahren zur Herstellung von SiC-enthaltendem Keramikmaterial aus Organopolysilazanen beschrieben. Die Organopolysilazane werden durch Umsetzung von Trichlororganosilanen oder deren Mischungen mit Dichlordiorganosilanen und Disilazanen bei Temperaturen von 25 - 300°C erhalten. Um bei diesem Verfahren verspinnbare Silazanpolymere und damit SiC-enthaltende Fasern, aber auch um allgemein keramisches Material mit befriedigenden physikalischen Eigenschaften zu erzielen, werden nur Trichlororganosilane verwendet, oder das molare Verhältnis Trichlororganosilan zu Dichlordiorganosilan muß zumindest größer oder gleich I sein. Disilazan als Stickstoffquelle wird hierbei zumeist in äquimolaren Mengen, bezogen auf den Chlorgehalt der verwendeten Silane, eingesetzt. Dies bedingt bei der Verwendung von hohen Anteilen an Trichlororganosilanen einen entsprechend erhöhten Verbrauch an Disilazan, welches die technologisch aufwendigste Komponente ist.

Aufgabe der Erfindung war es, SiC-enthaltende Keramikfasern aus einem Silazanpolymeren unter Vermeidung der Nachteile des Standes der Technik herzustellen.

Gelöst wird diese Aufgabe durch ein Verfahren zur Herstellung von SiC-enthaltender Keramikfaser, dadurch gekennzeichnet, daß als Ausgangsstoff ein Silazanpolymeres, erhalten durch Umsetzung von Dichlordiorganosilan der allgemeinen Formel

$R_2SiCl_2$

(R ist unabhängig voneinander Methyl-, Ethyl-, Propyl-, Vinyl-und Phenylrest)
mit Dichlormethylsilan und Hexamethyldisilazan in inerter Atmosphäre bei einer Temperatur im Bereich von 350 - 450°C unter Abdestillieren der flüchtigen Nebenprodukte, eingesetzt wird.

Durch das erfindungsgemäße Verfahren werden SiC-enthaltende Keramikfasern in guten Ausbeuten erhalten, die gute Wärme-und Oxidationsbeständigkeit und hervorragende mechanische Eigenschaften aufweisen.

Die zur Herstellung des Silazanpolymeren verwendeten Verbindungen Dichlormethylsilan und Hexamethyldisilazan sind ebenso wie die Dichlordiorganosilane der allgemeinen Formel $R_2SiCl_2$, wobei R die oben dafür gegebene Bedeutung hat, gebräuchliche Handelsprodukte, womit eine Angabe von Herstellungsverfahren unnötig erscheint. Eine Übersicht über gebräuchliche Herstellungsverfahren ist in W. Noll, Chemistry and Technology of Silicones, Academic Press Inc., Orlando 1968.

Beispiele für Verbindungen der allgemeinen Formel $R_2SiCl_2$, die einzeln oder als Mischungen eingesetzt werden, sind $(CH_3)_2SiCl_2$, $(CH_3CH_2)_2SiCl_2$, $(CH_3CH_2CH_2)_2SiCl_2$, $(CH_2=CH)_2SiCl_2$, $(C_6H_5)_2SiCl_2$, $(CH_3)(CH_2=CH)SiCl_2$, $(CH_3)(C_6H_5)SiCl_2$, $(CH_2=CH)(C_6H_5)SiCl_2$. Vorzugsweise werden Verbindungen der allgemeinen Formel $R_2SiCl_2$, bei denen R unabhängig voneinander Methyl-, Vinyl-oder Phenylrest ist, eingesetzt.

Die Reihenfolge der Zugabe der Komponenten bei der Herstellung des Silazanpolymeren ist nicht wesentlich. Falls Mischungen von Dichlordiorganosilanen verwendet werden, werden diese vorzugsweise vor der Zugabe zum Reaktionsgemisch bereitet.

Hexamethyldisilazan wird vorzugsweise in zumindest äquimolaren Mengen, bezogen auf den Chlorgehalt der im Reaktionsgemisch befindlichen Dichlorsilane, eingesetzt. Das molare Verhältnis von erfindungsgemäß eingesetztem Dichlormethylsilan zu den im Reaktionsgemisch befindlichen Dichlordiorganosilanen ist vorzugsweise 3 : 1 - 1 : 3.

Die Umsetzung zum Silazanpolymeren erfolgt in inerter Atmosphäre bei Temperaturen im Bereich von 350 - 450°C unter Abdestillieren flüchtigen Nebenprodukte.

Als Reaktionsapparaturen sind alle für Destillationen geeigneten Vorrichtungen möglich, beispielsweise ein Verdampfungskolben mit Liebigkühler und Vorlage. Die inerte Atmosphäre wird beispielsweise durch Spülen der Reaktionsapparatur mit Inertgas wie Stickstoff oder Argon erzeugt.

Die Dauer der Reaktion hängt von der angewandten Temperatur und der Aufheizgeschwindigkeit ab. Diese Parameter bestimmen neben den Ausgangsverbindungen und dem molaren Verhältnis der Ausgangsverbindungen auch das mittlere Molekulargewicht der erhaltenen Silazanpolymeren. Um Silazanpolymere mit einem mittleren Molekulargewicht von vorzugsweise 900 - 3000g/mol zu erhalten, hat es sich als vorteilhaft erwiesen, Aufheizgeschwindigkeiten von vorzugsweise 0,5 - 10 °C/min, insbesondere 1 - 3 °C/min, anzuwenden und dann das Reaktionsgemisch vorzugsweise 1 - 300min, insbesondere 15 - 30 min, auf der Endtemperatur zu halten. Nachfolgend wird vorzugsweise ein Vakuum für 1 - 15 min angelegt.

Nach dem Abkühlen unter inerter Atmosphäre werden Silazanpolymere erhalten, die weitgehend hydrolysestabil sind und die in an sich bekannter Weise versponnen werden können, da sie im Bereich zwischen dem Erweichungspunkt und etwa 100°C darüber sehr gute fadenziehende Eigenschaften aufweisen bzw. in organischen Lösungsmitteln wie Toluol, Tetrahydrofuran, Chloroform oder Tetrachlorkohlenstoff zur Herstellung einer Spinnlösung aufgelöst werden können.

Für den Spinnprozeß kann jede geeignete Vorrichtung verwendet werden, beispielsweise wird für den Schmelzspinnprozeß das über seinen Erweichungspunkt erhitzte Silazanpolymere aus einer Druckkammer, welche am Boden mit einer Mehrlochdüse mit vorzugsweise 0,1-0,5 mm Lochdurchmesser versehen ist, mittels Stickstoffdruck in einen luftgekühlten Spinnschacht gedrückt. Nachfolgend werden die Fasern auf einer stufenlos regelbaren Aufspulvorrichtung mit einer solchen Geschwindigkeit aufgewickelt und gestreckt, daß Fasern von vorzugsweise 5 - 50 µm Durchmesser des Querschnittes entstehen. Bei diesem Vorgang erhärten die Fasern.

Die versponnenen Silazanpolymeren werden weiter durch geeignete Methoden wie UV-Bestrahlung, Hydrolyse oder Tempern in oxidierender Atmosphäre unschmelzbar gemacht. Bevorzugt wird das Tempern bei Temperaturen von vorzugsweise 20 - 200 °C, insbesondere 50 - 100 °C in Gegenwart von Luftsauerstoff durchgeführt, wobei die Dauer des Temperns mit der Temperatur in Beziehung steht. Vorzugsweise erfolgt dies 1 - 48 Stunden, insbesondere 5 - 10 Stunden.

Das versponnene unschmelzbar gemachte Silazanpolymere wird bei Temperaturen von vorzugsweise zumindest 750°C, insbesondere zumindest 1100°C in inerter Atmosphäre, welche beispielsweise durch Inertgas wie Argon oder Stickstoff geschaffen wird, oder im Vakuum zu SiC-enthaltender Keramikfaser pyrolysiert. Die Aufheizgeschwindigkeit ist vorzugsweise 100 - 300 °C/h. Die Haltezeit bei der Endtemperatur ist vorzugsweise 10 - 60 min.

Es werden Keramikfasern erhalten, die neben SiC noch Anteile an $Si_3N_4$, $SiO_2$ und Kohlenstoff enthalten. Vor allem der Anteil an $Si_3N_4$ richtet sich nach der bei der Herstellung des Silazanpolymeren gewählten Zusammensetzung.

Die Keramikfasern gemäß der Erfindung können als Einzelfaden, Garn, Vorgarn, Seil, Strang und Faden-bzw. Fasermaterial angewandt werden.

### Beispiel 1

Eine Destillationsapparatur aus Glas, bestehend aus Verdampfungskolben, Liebigkühler und Vorlage wurde mit Stickstoff gespült und mit 0.75 mol Dichlormethylsilan, 0.125 mol Dichlormethylvinylsilan, 0.125 mol Dichlordimethylsilan und 2 mol Hexamethyldisilazan, beschickt. Mittels eines Metallbades wurde das Reaktionsgemisch mit 2°C/min auf 400°C erhitzt. Das Reaktionsgemisch wurde 30 min auf dieser Temperatur gehalten. Nachfolgend wurde 5 min ein Vakuum angelegt. Nach dem Abkühlen unter Stickstoff wurden 38,9g eines spröden Harzes erhalten.

Erweichungspunkt: 135°C
Molekulargewicht: 2000 g/mol
IR-Spektrum : 3400 $cm^{-1}$ (N-H), 2030 $cm^{-1}$ (Si-H), 1410 und 1260 $cm^{-1}$ (Si-$CH_3$)

Dieses Harz wurde zu Fasern versponnen. Dabei wurde das auf 145°C erhitzte Harz aus einer beheizten Druckkammer, welche am Boden mit einer Mehrlochdüse mit 0.2 mm Lochdurchmesser versehen war, mittels Stickstoffdruck in einen luftgekühlten Spinnschacht gedrückt. An einer stufenlos regelbaren Aufspulvorrichtung wurden die Fasern auf 10 - 20 µm Durchmesser des Querschnittes gestreckt und aufgewickelt. Die bewickelte Trommel wurde 10 Stunden bei 100°C an der Luft getempert.

Anschließend wurden die Fasern unter Argonatmosphäre eine halbe Stunde bei 1300°C, wobei die Aufheizgeschwindigkeit 200°C/h betrug, pyrolysiert, wodurch schwarze, hochfeste, SiC-und $Si_3N_4$-enthaltende Keramikfasern erhalten wurden.

Ausbeute an Keramikfasern, bezogen auf die eingesetzte Menge Silazanpolymerfaser: 47,6%

### Beispiel 2

Gemäß Beispiel 1 wurden 0.5 mol Dichlormethylsilan, 0.25 mol Dichlormethylphenylsilan, 0.125 mol Dichlormethylvinylsilan und 0.125 mol Dichlordimethylsilan mit 2 mol Hexamethyldisilazan bei 420°C umgesetzt. Es wurden 56.5 g Harz erhalten.

Erweichungspunkt: 104°C
Molekulargewicht: 1800 g/mol
IR-Spektrum : 3390 $cm^{-1}$(N-H)2120$cm^{-1}$(Si-H)-3070,3020,2960,2900$cm^{-1}$ (C-H)1401,1430$cm^{-1}$(Si-$CH_3$) 1590 $cm^{-1}$(C = C)

Dieses Harz wurde gemäß Beispiel I bei 120 °C versponnen und bei 110°C pyrolysiert.
Ausbeute: 37 %

### Beispiel 3

Gemäß Beispiel I wurden 0.75 mol Dichlormethylsilan, 0.125 mol Dichlormethylphenylsilan und 0.125 mol Dichlordimethylsilan mit 2 mol Hexamethyldisilazan bei 420°C umgesetzt. Es wurden 14.6 g Harz erhalten.

Erweichungspunkt: 75°C
Molekulargewicht: 2380 g/mol
IR-Spektrum : 3400 cm$^{-1}$ (N-H); 2130 cm$^{-1}$ (Si-H); 2960, 2900 cm$^{-1}$ (C-H) 1410, 1260 cm$^{-1}$ (Si-CH$_3$); 1590 cm$^{-1}$ (C=C)
Dieses Harz wurde gemäß Beispiel I bei 90 °C versponnen und bei 1100 °C pyrolysiert.
Ausbeute: 64,9 %

### Beispiel 4

Gemäß Beispiel I wurden 0.25 mol Dichlormethylsilan, 0.25 mol Dichlormethylphenylsilan, 0.25 mol Dichlormethylvinylsilan und 0.25 mol Dichlordimethylsilan mit 2 mol Hexamethyldisilazan bei 400°C umgesetzt. Es wurden 40.1 g Harz erhalten.

Erweichungspunkt: 60°C
Molekulargewicht: 1430g/mol
IR-Spektrum : 3390cm$^{-1}$ (N-H); 3070, 3050, 3020, 2960, 2900cm$^{-1}$ (C-H)
2130cm$^{-1}$ (Si-H); 1590 cm$^{-1}$ (C=C); 1410, 1255cm$^{-1}$(SCH$_3$)
Dieses Harz wurde gemäß Beispiel I bei 75 °C versponnen und bei 110° C pyrolysiert
Ausbeute: 31.7 %

### Beispiel 5

Gemäß Beispiel I wurden 0.75 mol Dichlormethylsilan und 0.125 mol Dichlormethylphenylsilan mit 2,0 mol Hexamethyldisilazan bei 420°C umgesetzt. Es wurden 24.2 g Harz erhalten.

Erweichungspunkt: 50°C
Molekulargewicht: 940g/mol
IR-Spektrum : 3400 cm$^{-1}$(N-H); 3070, 3050, 2960, 2900 cm$^{-1}$ (C-H) 2130 cm$^{-1}$ (Si-H); 1590 cm$^{-1}$-(C=C), 1410, 1260cm$^{-1}$(Si-CH$_3$)
Dieses Harz wurde gemäß Beispiel 1 bei 65 °C versponnen und bei 1100°C pyrolysiert.
Ausbeute: 34.3 %

### Ansprüche

1. Verfahren zur Herstellung von SiC-enthaltender Keramikfaser,
**dadurch gekennzeichnet,**
daß als Ausgangsstoff ein Silazanpolymeres, erhalten durch Umsetzung von Dichlordiorganosilan der allgemeinen Formel
$$R_2SiCl_2$$

(R ist unabhängig voneinander Methyl-, Ethyl-, Propyl-, Vinyl-und Phenylrest)
mit Dichlormethylsilan und Hexamethyldisilazan in inerter Atmosphäre bei einer Temperatur im Bereich von 350 - 450°C unter Abdestillieren der flüchtigen Nebenprodukte, umgesetzt wird.

2. Verfahren zur Herstellung von SiC-enthaltender Keramikfaser nach Anspruch I,
**dadurch gekennzeichnet,**
daß Dichlormethylsilan in einem molaren Verhältnis von 3 : 1 - 1 : 3 , bezogen auf die Dichlordiorganosilane, eingesetzt wird.

3. Verfahren zur Herstellung von SiC-enthaltender Keramikfaser nach Anspruch I oder 2,
**dadurch gekennzeichnet,**
daß das Silazanpolymere in einem Schmelzspinnprozeß oder aus einer Spinnlösung versponnen wird.

4. Verfahren zur Herstellung von SiC-enthaltender Keramikfaser nach einem der Ansprüche I - 3,
**dadurch gekennzeichnet,**
daß das Silazanpolymere durch UV-Bestrahlung, Hydrolyse oder Tempern in oxidierender Atmosphäre unschmelzbar gemacht wird.

5. Verfahren zur Herstellung von SiC-enthaltender Keramikfaser nach einem der Ansprüche I - 4,
**dadurch gekennzeichnet,**
daß das Silazanpolymere in inerter Atmosphäre oder im Vakuum bei zumindest 750°C pyrolysiert wird.